# FASCICULE DE BREVET EUROPEEN

(11) **EP 4 458 560 B1**
(45) Date de publication et mention de la délivrance du brevet: **14.01.2026**
(21) Numéro de dépôt: 24163027.6
(22) Date de dépôt: 12.03.2024
(51) Int. Cl.: B29C 65/14, B29C 65/78, B29C 65/00, B29C 65/20

(54) **PROCÉDÉ ET DISPOSITIF DE SOUDAGE D'UNE PIÈCE EN POLYMÈRE THERMOPLASTIQUE SUR UNE BASE CONTENANT DU POLYMÈRE THERMOPLASTIQUE**
VERFAHREN UND VORRICHTUNG ZUM VERSCHWEISSEN EINES THERMOPLASTISCHEN KUNSTSTOFFTEILS AUF EINE BASIS EINES THERMOPLASTISCHEN POLYMERS
METHOD AND DEVICE FOR WELDING A THERMOPLASTIC POLYMER PART TO A BASE CONTAINING THERMOPLASTIC POLYMER

(30) Priorité: 13.03.2023 FR 2302281
(43) Date de publication de la demande: 06.11.2024
(73) Titulaire: Cogit Composites, 18390 Saint-Germain du Puy (FR)
(72) Inventeur: ROUA, Christophe, 18000 Bourges (FR)
(74) Mandataire: IP Trust

(56) Documents cités:
- JP-A- S63 151 432
- US-A1- 2002 108 707
- US-A1- 2003 221 783

## Description

Le domaine de l'invention et celui de la conception et de la fabrication de pièces thermoplastiques soudés.

L'invention concerne plus particulièrement un procédé et un dispositif permettant de réaliser une pièce composée de deux parties en polymère thermoplastique assemblées l'une à l'autre par soudage.

Il est connu le fait de réaliser un assemblage d'une pièce en matériau polymère sur un élément en matériau composite par collage. Ceci implique d'apporter de la matière (la colle), et permet d'obtenir de bonnes performances mécaniques.

Dans le domaine de l'invention, il est connu la soudure thermoplastique de deux composites de même nature thermoplastique.

Par exemple, un dispositif visant à souder deux plaques en composite thermoplastique l'une à l'autre comprend des moyens de chauffe et des moyens de pressage.

Les moyens de chauffe comprennent un bloc radiant destiné à chauffer et à émettre un rayonnement infrarouge.

Le dispositif comprend également deux plateaux entre lesquels le soudage est réalisé.

Chaque plateau est configuré pour porter l'une des deux plaques à souder. Ces plaques à souder, portées par les plateaux, sont positionnées de manière à réaliser un chevauchement entre une partie de l'une des plaques, et une partie de l'autre des plaques. Le soudage est réalisé entre ces deux parties positionnées en vis-à-vis l'une de l'autre.

Dans un premier temps, les plateaux sont éloignés l'un de l'autre et un volume libre est ménagé entre les plateaux, et ainsi entre les plaques soudés, pour permettre l'insertion du bloc radiant qui, une fois mis en chauffe, provoque la chauffe des plaques à souder au niveau de leur surface exposée au rayonnement infrarouge du bloc radiant.

Ensuite, le bloc radiant est retiré et les plateaux se referment l'un contre l'autre rapidement. Les plateaux sont pressés l'un contre l'autre de manière à ce qu'un joint de soudage formé entre les plaques se consolide, puis les plateaux sont écartés l'un de l'autre lentement pour permettre le retrait des plaques soudées l'une à l'autre.

Il existe un besoin d'amélioration d'une telle technique, et plus précisément de permettre le soudage d'éléments plastiques thermoplastique de petites dimensions sur des plaques de composite thermoplastique, en présentant des performances mécaniques au moins égale à celle des assemblages de type collé.

Il existe également un besoin d'une telle technique d'assemblage qui puisse être rapide et automatisée, et notamment plus rapide qu'un procédé par collage tout en ne nécessitant pas d'apport de matière supplémentaire.

A titre indicatif, il est connu le document de brevet publié sous le numéro US 2003/221783 A1 qui décrit un procédé et un dispositif de soudage par rayonnement infrarouge de deux pièces, le document de brevet publié sous le numéro JP S63 151432 A qui décrit une technique pour réaliser un masque de protection d'un matériau ou de composant autour d'une zone visée par un rayonnement infrarouge, et le document de brevet publié sous le numéro US 2002/108707 A1 qui décrit une méthode pour réaliser une liaison en présence d'un substrat en verre et d'un adhésif par rayonnement infrarouge.

L'invention a notamment pour objectif de répondre à ces besoins de l'art antérieur.

Plus précisément, l'invention a pour objectif de proposer un procédé et un dispositif de soudage d'une pièce en matériau polymère thermoplastique sur une autre pièce en matériau polymère thermoplastique, de plus grande dimension.

L'invention a également pour objectif de fournir un tel procédé et un tel dispositif qui permettent d'obtenir un assemblage d'une qualité mécanique au moins égale à celle des assemblages par collage.

L'invention a encore pour objectif de fournir un tel dispositif et un tel procédé qui permettent de réaliser un assemblage de manière plus rapide qu'un procédé selon l'art antérieur et ne nécessitant pas d'apport de matière.

Ces objectifs, ainsi que d'autres qui apparaîtront par la suite, sont atteints grâce à l'invention qui a pour objet un procédé de soudage d'un élément à souder sur une base, l'élément à souder présentant une surface d'interface en polymère thermoplastique destinée à être soudée sur une zone de soudage de la base, au moins la zone de soudage de la base étant en polymère thermoplastique apte à s'unir par soudure avec le polymère thermoplastique de la surface d'interface de l'élément à souder, le procédé comprenant une étape de chauffe de l'élément à souder et de la base, puis une étape de pressage de l'élément à souder sur la base, le polymère thermoplastique de la surface d'interface présentant une première borne de température correspondant à une température à partir de laquelle le polymère thermoplastique de la surface d'interface est à un état fondu,
le polymère thermoplastique de la zone de soudage présentant une deuxième borne de température correspondant à une température à partir de laquelle le polymère thermoplastique de la surface d'interface est à un état fondu ;
l'étape de chauffe comprenant une sous-étape principale de chauffe consistant à :
   - chauffer la surface d'interface à une température supérieure à la première borne de température, et
   - chauffer la zone de soudage à une température inférieure à la deuxième borne de température ;
caractérisé en ce que, à l'issue de l'étape de chauffe, l'élément à souder a emmagasiné une quantité de chaleur égale ou supérieure à une quantité de chaleur nécessaire pour porter, lors de l'étape de pressage, la température de la zone de soudage à la température de fusion du polymère thermoplastique de la zone de soudage de la base, et permettre une reptation moléculaire entre la surface d'interface et la zone de soudage.

Grâce au procédé selon l'invention, il est possible de réaliser un assemblage d'un élément à souder sur une base par l'intermédiaire d'un soudage local des matériaux polymères thermoplastiques respectifs, permettant d'obtenir dans un temps court un assemblage d'une qualité mécanique au moins égale à celle des assemblages par collage.

En effet, grâce à la surface d'interface qui est amenée à une température supérieure à la première borne de température, et à la zone de soudage qui est amenée à une température inférieure à la seconde borne de température, alors lors de l'étape de pressage, il se produit une fusion temporaire (une reptation moléculaire) et locale à l'interface entre l'élément à souder et la base grâce à la quantité de chaleur emmagasinée par la base localement au niveau de la surface d'interface. Ce soudage permet de ne pas affecter la qualité du matériau de la base car le traitement radiatif est local et superficiel.

Des essais ont permis de démontrer que les performances mécaniques d'un tel assemblage est au moins égal à celles des assemblages de type collé. De plus, pas, ou à tout le moins peu, d'endommagements de la base ont été constatés, et ce notamment au niveau d'un délaminage post-soudage ou d'un glissement de pli.

Ce procédé permet de ne pas générer de pollution particulaire ou moléculaire, notamment présente lors de l'apport de matière, par exemple pour un brasage, ou pour un collage.

Ce procédé est automatisable en plus de présenter une rapidité d'exécution importante.

La surface d'interface peut être en polymère thermoplastique semi-cristallin ou amorphe, et la zone de soudage de la base peut être en polymère thermoplastique semi-cristallin ou amorphe.

Si le polymère thermoplastique est semi-cristallin, la borne de température correspond à la température de fusion dudit polymère thermoplastique semi-cristallin.

Si le polymère thermoplastique est amorphe, la borne de température correspond à la température de transition vitreuse dudit polymère thermoplastique amorphe.

Selon une solution préférée, lors de la sous-étape principale de chauffe, la surface d'interface est chauffée à une température inférieure à 120%, préférentiellement inférieure à 116%, de la température de fusion du polymère thermoplastique semi-cristallin de la surface d'interface de l'élément à souder.

Avantageusement, lors de la sous-étape principale de chauffe, la surface d'interface est chauffée à une température supérieure à 110%. de la température de fusion du polymère thermoplastique semi-cristallin.

Selon une autre caractéristique préférée, lors de la sous-étape principale de chauffe, la zone de soudage est chauffée à une température supérieure à 90%, préférentiellement supérieure à 99%, de la température de fusion du polymère thermoplastique semi-cristallin de la zone de soudage de la base.

Selon une solution avantageuse, lors de l'étape de chauffe, le chauffage de la zone de soudage est réalisé en focalisant la chauffe sur la zone de soudage.

De cette manière, il est préservé le matériau de la base en dehors de la zone de soudage.

Notamment, il est évité de chauffer le pourtour de la zone de soudage, ou à tout le moins limiter cette chauffe, pour éviter de modifier les propriétés structurelles du matériau du pourtour de la zone de soudage.

Selon une variante avantageuse, l'étape de chauffe comprend une sous-étape terminale de chauffe, succédant à la sous-étape principale de chauffe, et pendant laquelle on augmente la chauffe de la zone de soudage à la deuxième borne ou au-delà de la deuxième borne de température.

Grâce à une telle sous-étape terminale de chauffe, il est compensé le fait qu'entre la fin de la chauffe et la mise en contact de l'élément à souder et de la base lors du pressage, il existe un intervalle de temps non compressible produisant un refroidissement perceptible de la zone de soudage. Il s'agit de pertes calorifiques par convection.

Selon une autre variante de réalisation, pendant la sous-étape terminale de chauffe, on augmente la chauffe de la surface d'interface par rapport à une température atteinte lors de la sous-étape principale de chauffe.

Dans ce cas, si le polymère thermoplastique de la surface d'interface est un polymère thermoplastique semi-cristallin, la surface d'interface est portée à une température strictement inférieure à 135% de la température de fusion du polymère thermoplastique, et préférentiellement inférieure à 130% de cette température de fusion.

Une dégradation de la matière thermoplastique est ainsi évitée.

Selon cette autre variante, il est également procédé à la chauffe de la surface d'interface pour compenser l'intervalle de temps intervenant entre la fin effective de la chauffe et le moment où intervient le contact entre l'élément à souder et la base lors de la phase de pressage.

Selon un mode de réalisation avantageux, la sous-étape principale de chauffe comprend :
- une phase préalable de montée en température d'une température de surface de la surface d'interface et de la zone de soudage ;
- une phase terminale de stabilisation de la température de surface de la surface d'interface et de la zone de soudage.

Grâce à une telle sous-étape principale de chauffe, il est réalisé une homogénéisation de la température de surface au niveau de la surface d'interface et de la zone de soudage suite à la phase préalable de montée en température.

Ceci améliore la qualité de soudage obtenue sur l'ensemble de la surface d'interface et de la zone de soudage.

L'invention a également pour objet un dispositif de soudage d'un élément à souder sur une base, l'élément à souder présentant une surface d'interface en polymère thermoplastique destinée à être soudée sur une zone de soudage de la base, la zone de soudage de la base étant en polymère thermoplastique apte à s'unir par soudure avec le polymère thermoplastique de la surface d'interface de l'élément à souder, le dispositif comprenant des moyens de chauffage de l'élément à souder et de la base, et des moyens de pressage de l'élément à souder contre la base,
les moyens de chauffage comprenant deux sous-ensembles distincts de chauffage, dont un premier sous-ensemble de chauffage pour le chauffage de l'élément à souder et un second sous-ensemble de chauffage pour le chauffage de la base,
le dispositif de soudage comprenant une unité électronique de contrôle des moyens de chauffage configurée pour réaliser un contrôle indépendant et distinct du premier sous-ensemble de chauffage et du second sous-ensemble de chauffage, l'unité électronique de contrôle comprenant une interface de saisie et de définition :
   - d'une première consigne de température de chauffe pour le premier sous-ensemble de chauffage, lors d'une sous-étape principale de chauffe, cette première consigne de température étant supérieure à une première borne de température correspondant à une température à partir de laquelle le polymère thermoplastique de la surface d'interface est à un état fondu ;
   - d'une deuxième consigne de température de chauffe pour le second sous-ensemble de chauffage, lors de la sous-étape principale de chauffe, cette deuxième consigne de température de chauffe étant à inférieure à une deuxième borne de température correspondant à une température à partir de laquelle le polymère thermoplastique de la zone de soudage est à un état fondu,
caractérisé en ce qu'il comprend :
   - des moyens électroniques de détermination d'une quantité de chaleur nécessaire pour porter, lors d'une étape de pressage, la température de la zone de soudage à la deuxième borne de température, et permettre une reptation moléculaire entre la surface d'interface et la zone de soudage ;
   - une unité électronique de contrôle configurée pour calculer une puissance et/ou une durée de chauffe prédéterminée, ou minimale, pour le premier sous-ensemble de chauffage, lors de la sous-étape principale de chauffe, puis pour piloter les moyens de chauffage en fonction de cette puissance et/ou durée de chauffe.

Le dispositif de soudage permet de mettre en œuvre le procédé précédemment décrit, et permet de présenter ses avantages.

Selon une caractéristique avantageuse, le dispositif comprend un masque de focalisation de la chauffe, ou un concentrateur de faisceaux radiatifs, sur la zone de soudage de la base.

Un tel masque de focalisation ou un tel concentrateur permettent de concentrer la chauffe sur la zone de soudage, et de tendre à éviter de chauffer le pourtour de la zone de soudage de la base.

Selon une caractéristique préférée, le dispositif comprend un porte élément configuré pour porter un élément à souder, le porte élément comprenant une paroi périphérique entourant une cavité de réception de l'élément à souder, la paroi périphérique présentant une surface périphérique de pressage destinée à s'étendre autour de la surface d'interface de l'élément à souder reçu dans la cavité de réception, dans la continuité de cette surface d'interface.

Grâce à un tel porte élément, un fluage de l'élément à souder est évité, ou à tout le moins limité, suite à son pressage sur la base. En effet, la pression appliquée entre les deux éléments lors de leur mise en contact tend à faire fluer le polymère de l'élément à souder qui est à l'état fondu.

Il est également permis de maintenir la qualité structurelle de la base en pourtour de la zone de soudage.

Selon un mode de réalisation préféré, les moyens électroniques de détermination sont programmés avec un abaque de calcul, et configurés pour calculer la quantité de chaleur nécessaire à partir de la première borne de température, de la deuxième borne de température, de la première consigne de température de chauffe, de la deuxième consigne de température de chauffe, et de l'abaque de calcul.

D'autres caractéristiques et avantages de l'invention apparaîtront plus clairement à la lecture de la description suivante de différents modes de réalisation préférentiels de l'invention, donnés à titre d'exemples illustratifs et non limitatifs, et de la figure annexée :

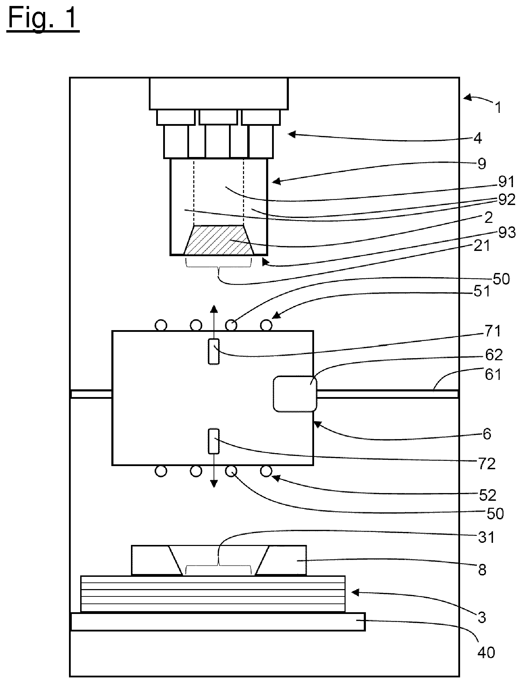

- la figure 1 est une représentation schématique d'un dispositif de soudage d'un élément à souder sur une base, ce dispositif mettant en œuvre un procédé selon l'invention.

En référence à la figure 1, le dispositif 1 de soudage selon l'invention est décrit ci-après.

Ce dispositif 1 de soudage est conçu pour mettre en œuvre le procédé de soudage qui sera décrit par la suite.

Le dispositif 1 de soudage est conçu pour permettre le soudage d'un élément 2 à souder sur une base 3.

L'élément 2 à souder présente une surface d'interface 21.

Cette surface d'interface 21 est, selon le présent mode de réalisation, plane. Toutefois, il est envisageable que cette surface d'interface 21 ne soit pas plane.

La base 3 présente quant à elle une zone de soudage 31.

Selon le présent mode de réalisation, cette zone de soudage 31 est plane. Toutefois, comme pour la surface d'interface 21, il est envisageable que la zone de soudage 31 ne soit pas plane.

La surface d'interface 21 et la zone de soudage 31 présentent chacune une forme adaptée à leur soudage. Cette surface d'interface 21 et cette zone de soudage 31, pour optimiser leur soudage, présentent une forme rigoureusement complémentaire. Il est toutefois envisageable une potentielle différence de relief entre les deux formes, par exemple pour réaliser un logement entre la surface d'interface 21 et la zone de soudage 31.

Lors du soudage, la surface d'interface 21 de l'élément 2 à souder est destinée à être soudée sur la zone de soudage 31 de la base 3.

La surface 21 de l'élément 2 à souder est en polymère thermoplastique.

Plus généralement, l'élément 2 à souder peut être entièrement en polymère thermoplastique.

La zone de soudage 31 de la base 3 est quant à elle en polymère thermoplastique. Ce polymère thermoplastique de la zone de soudage 31 est notamment apte à s'unir par soudage avec le polymère thermoplastique de la surface d'interface 21 de l'élément 2 à souder.

La base 3 peut être entièrement en polymère thermoplastique.

Toutefois, préférentiellement, la base 3 est un matériau composite.

De ce fait, la base 3 peut comprendre une matrice qui est alors en polymère thermoplastique.

Dans ce cas, la base 3 en composite peut présenter une pluralité de couches dont une couche superficielle qui est alors en polymère thermoplastique, de manière à ce que la zone de soudage 31 soit en polymère thermoplastique.

Ces polymères thermoplastiques peuvent être des polymères thermoplastique amorphes ou semi-cristallins.

Les couples polymères thermoplastiques peuvent notamment être les suivants, respectivement pour la zone de soudage 31 et pour la surface d'interface 21 :
- polyamide/polyamide,
- sulfure de polyphénylène/sulfure de polyphénylène,
- polyétheréthercétone/polyétheréthercétone,
- polyétheréthercétone/polyétherimide,
- polyétherimide/polyétherimide.

Le polymère thermoplastique de la surface d'interface présente une borne de température, dite première borne de température, qui correspond à une température à partir de laquelle le polymère thermoplastique de la surface d'interface est à un état fondu.

De même, le polymère thermoplastique de la zone de soudage présente une borne de température, dite deuxième borne de température, qui correspond à une température à partir de laquelle le polymère thermoplastique de la surface d'interface est à un état fondu.

Si le polymère thermoplastique est semi-cristallin, la borne de température correspond alors à la température de fusion dudit polymère thermoplastique semi-cristallin.

Si le polymère thermoplastique est amorphe, la borne de température correspond alors à la température de transition vitreuse dudit polymère thermoplastique amorphe.

Le dispositif 1 de soudage comprend un bâti permettant de porter ses différents composants décrits ci-après.

Le dispositif 1 comprend également :
- des moyens de chauffage de l'élément 2 à souder et de la base 3 ;
- des moyens de pressage 4 de l'élément 2 à souder contre la base 3.

Le dispositif 1 comprend encore un charriot 6.

Ce charriot 6 est monté mobile sur un axe 61.

L'axe 61 s'étend transversalement à un axe de pressage de l'élément 2 à souder contre la base 3.

Le charriot 6 comprend des moyens moteurs 62 permettant de motoriser le déplacement du charriot 6 le long du rail 61.

Les moyens de chauffage précédemment évoqués sont portés par le charriot 6.

Ces moyens de chauffage comprennent plus précisément deux sous-ensembles distincts de chauffage.

Les moyens de chauffage comprennent notamment un premier sous-ensemble de chauffage 51 pour le chauffage de l'élément 2 à souder, et un second sous-ensemble de chauffage 52 pour le chauffage de la base 3.

Le premier sous-ensemble de chauffage 51 et le second sous-ensemble de chauffage 52 comprennent des émetteurs 50 d'un rayonnement infrarouge.

Alternativement, les émetteurs 50 d'un rayonnement infrarouge peuvent être remplacé par d'autres moyens d'émission d'un rayonnement chauffant tels que des lasers.

Ces émetteurs 50 sont positionnés d'un côté d'un charriot 6 pour pouvoir émettre un rayonnement en direction de l'élément 2 à souder, et d'un autre côté du charriot 6, opposé au premier côté, pour émettre un rayonnement en direction de la base 3.

Tel que cela est expliqué par la suite, les émetteurs 50 du premier sous-ensemble de chauffage 51 sont conçus pour être mis en fonctionnement et contrôlés de manière indépendante des émetteurs 50 du second sous-ensemble de chauffage 52.

Selon le présent mode de réalisation, le dispositif 1 comprend en outre des moyens de mesure d'une température de surface de la surface d'interface 21 et de la zone de soudage 31.

Ces moyens de mesure comprennent un premier pyromètre 71 et un second pyromètre 72.

Le premier pyromètre 71 et le second pyromètre 72 sont portés par le charriot 6. Tel que cela est illustré sur la figure 1, ces pyromètres 71, 72 sont orientés pour réaliser une mesure respectivement de la surface d'interface 21 et de la zone de soudage 31.

Ces pyromètres schématiquement représentés peuvent intégrer des miroirs en bout pour déporter l'électronique des émetteurs 50.

Le dispositif 1 comprend encore une table de maintien 40 de la base 3. Cette table de maintien 40 permet de maintenir la base 3 lors du pressage de l'élément 2 à souder par les moyens de pressage 4.

Tel que cela est détaillé par la suite, le procédé de soudage comprend une étape de chauffe puis une étape de pressage. Lors de l'étape de chauffe, le charriot 6 est intercalé entre l'élément 2 à souder et la base 3, pour permettre le chauffage de la surface d'interface 21 et de la zone de soudage 31, puis le charriot 6 est décalé pour permettre le pressage de l'élément 2 à souder contre la base 3.

Selon le mode de réalisation représenté, le dispositif 1 comprend en outre un masque de focalisation 8 de la chauffe sur la zone de soudage 31 de la base 3.

Ce masque de focalisation 8 présente une cavité traversante de forme tronconique permettant le passage d'un rayonnement infrarouge produit par les émetteurs 50 du second sous-ensemble de chauffe 52 en direction de la zone de soudage 31.

Ce masque de focalisation 8 peut par exemple être en céramique.

Ce masque de focalisation 8 est couplé au charriot 6 de manière à ce qu'il puisse être retiré lorsque le charriot 6 est décalé en côté de l'axe de pressage de l'élément 2 à souder vers la base 3.

Selon un mode de réalisation non représenté, le dispositif peut comprendre un concentrateur de faisceaux radiatifs en alternative au masque de focalisation.

Toujours selon le présent mode de réalisation représenté, le dispositif 1 comprend en outre un porte-élément 9. Ce porte élément 9 est couplé aux moyens de pressage 4.

Ce porte élément 9 est configuré pour porter l'élément 2 à souder.

Le porte élément 9 comprend une partie principale 91 et une paroi périphérique 92.

Le porte élément 9 délimite une cavité de réception de l'élément 2 à souder. La paroi périphérique 92 entoure la cavité de réception de l'élément 2 à souder.

En outre, la paroi périphérique 92 présente une surface périphérique 93 de pressage qui est destinée à s'étendre autour de la surface d'interface 21 de l'élément 2 à souder reçu dans la cavité de réception. Cette surface périphérique 93 s'étend dans la continuité de la surface d'interface 21.

Avantageusement, la paroi périphérique 92 est montée mobile par rapport à la partie principale 91.

Dans ce cas, les moyens de pressage 4 sont configurés pour appliquer une force de pressage différenciée sur la partie principale 91 et sur la paroi périphérique 92.

En l'occurrence, les moyens de pressage 4 peuvent être configurés pour exercer une force de pressage supérieure au niveau de la paroi périphérique 92 par rapport à la force de pressage exercée sur la partie principale 91.

De cette manière, lors du pressage, il est évité ou limité un fluage de l'élément 2 à souder et il est maintenu la qualité de la base 3.

Le procédé de soudage est à présent décrit ci-après.

Le procédé de soudage est un procédé de soudage de l'élément 2 à souder sur la base 3.

Ce procédé de soudage comprend une étape de chauffe de l'élément 2 à souder et de la base 3.

Successivement à l'étape de chauffe, le procédé comprend une étape de pressage de l'élément 2 à souder sur la base 3.

L'étape de chauffe comprend une sous-étape principale de chauffe.

Cette sous-étape principale de chauffe consiste à :
- chauffer la surface d'interface 21 à une température supérieure à la première borne de température, et
- chauffer la zone de soudage 31 à une température inférieure à la deuxième borne de température.

A l'issue de l'étape de chauffe, l'élément 2 à souder a emmagasiné une quantité de chaleur égale ou supérieure à une quantité de chaleur nécessaire pour porter, lors de l'étape de pressage, la température de la zone de soudage 31 à la température de fusion du polymère thermoplastique de la zone de soudage 31 de la base 3, et permettre une reptation moléculaire entre la surface d'interface 21 et la zone de soudage 31.

Dans le cas où les polymères thermoplastiques de la surface d'interface 21 et de la zone de soudage 31 sont des polymères thermoplastiques semi-cristallins, la première borne de température et la deuxième borne de température correspondent aux températures de fusion respectives de ces polymères thermoplastiques.

Dans le cas où les polymères thermoplastiques de la surface d'interface 21 et de la zone de soudage 31 sont des polymères thermoplastiques amorphes, la première borne de température et la deuxième borne de température correspondent aux températures de transition vitreuses respectives de ces polymères thermoplastiques.

Dans le cas où le ou les polymères thermoplastiques de la surface d'interface 21 et/ou de la zone de soudage 31 sont du type semi-cristallins, alors les paramètres suivants sont applicables :
Lors de la sous-étape principale de chauffe, la surface d'interface 21 est chauffée à une température inférieure à 120%, préférentiellement inférieure à 116%, de la température de fusion du polymère thermoplastique semi-cristallin de la surface d'interface 21 de l'élément 2 à souder.

Avantageusement, lors de la sous-étape principale de chauffe, la surface d'interface est chauffée à une température supérieure à 110%. de la température de fusion du polymère thermoplastique semi-cristallin.

Lors de cette sous-étape principale de chauffe, la zone de soudage 31 est chauffée à une température supérieure à 90%, préférentiellement supérieure à 99%, de la température de fusion du polymère thermoplastique semi-cristallin de la zone de soudage 31 de la base 3.

En d'autres termes, la surface d'interface 21 est amenée juste au-delà de la première borne de température, tandis que la zone de soudage 31 est amenée juste endeçà de la deuxième borne de température.

Selon le présent mode de réalisation, l'étape de chauffe comprend en outre une sous-étape terminale de chauffe.

Cette sous-étape terminale de chauffe, qui succède à la sous-étape principale de chauffe, est destinée à compenser le fait qu'entre la fin de la chauffe et le début effectif du pressage de l'élément 2 à souder contre la base 3, il existe un intervalle de temps non compressible durant lequel la zone d'interface 21 et la zone de soudage 31 diminuent en température.

Cet intervalle de temps correspond notamment au temps nécessaire pour retirer le chariot 6, et débuter le pressage.

A cet effet, lors de la sous-étape terminale de chauffe, on augmente la chauffe de la zone de soudage 31 à la température de fusion, ou à une température supérieure à la température de fusion du polymère thermoplastique de la zone de soudage 31 de la base 3.

Pendant la sous-étape terminale de chauffe, il peut être également procédé à une augmentation de la chauffe de la surface d'interface 21 par rapport à une température atteinte lors de la sous-étape principale de chauffe.

En d'autres termes, il est réalisé un pic de chauffe préalablement au retrait du charriot 6 et au début du pressage de l'élément 2 à souder contre la base 3.

Préférentiellement, trois secondes au maximum s'écoulent entre la fin de la chauffe et le début pressage. Au-delà, une surchauffe non désirable vis-vis des matériaux est nécessaire. Bien entendu, il est cherché à raccourcir au maximum ce délai.

Lors de la sous-étape principale de chauffe, il est procédé à une stabilisation des températures de surface de la surface d'interface 21 et de la zone de soudage 31.

Aussi, la sous-étape principale de chauffe comprend :
- une phase préalable de montée en température d'une température de la surface d'interface 21 et de la zone de soudage 31 ;
- une phase terminale de stabilisation de la température de surface de la surface d'interface 21 et de la zone de soudage 31.

Lors de la phase préalable de montée en température, la surface d'interface 21 et la zone de soudage 31 voient leur température augmenter sous l'effet du rayonnement infrarouge des émetteurs 50 jusqu'à une température de consigne préprogrammée qui est différente et distincte en fonction de la surface d'interface 21 et de la zone de soudage 31.

Le procédé met en œuvre avantageusement une étape de contrôle en temps réel des températures de surface de la zone d'interface 21 et de la zone de soudage 31. Ces températures de surface sont contrôlées grâce au premier pyromètre 71 et au second pyromètre 72.

Dès que l'une de la surface d'interface 21 ou de la zone de soudage 31, a atteint la température de consigne, il est attendu que l'autre de la surface d'interface 21 et de la zone de soudage 31 ait également atteint sa température de consigne. La phase préalable de montée en température est alors terminée et il est passé à la phase terminale de stabilisation.

Lors de cette phase terminale de stabilisation, les températures de consignes respectives sont maintenues de manière à ce qu'il se produise une homogénéisation des températures de surface en tous points de la surface d'interface 21 et en tous points de la zone de soudage 31.

Lors de l'étape de chauffe, le chauffage de la zone de soudage 31 est réalisé en focalisant la chauffe sur la zone de soudage 31.

Cette focalisation est notamment réalisée à l'aide du masque de focalisation 8 précédemment décrit.

Le dispositif 1 est spécialement adapté pour mettre en œuvre le procédé décrit précédemment.

En effet, le dispositif 1 comprend une unité électronique de contrôle des moyens de chauffage. Cette unité électronique de contrôle réalise un contrôle indépendant et distinct du premier sous-ensemble de chauffage 51 et du second sous-ensemble de chauffage 52.

L'unité électronique de contrôle comprend notamment une interface de saisie et de définition :
- d'une première consigne de température de chauffe pour le premier sous-ensemble de chauffage 51, cette première consigne de température étant supérieure à la première borne de température correspondant à une température à partir de laquelle le polymère thermoplastique de la surface d'interface est à un état fondu ;
- d'une deuxième consigne de température de chauffe pour le second sous-ensemble de chauffage 52, cette deuxième consigne de température de chauffe étant à inférieure à la deuxième borne de température correspondant à une température à partir de laquelle le polymère thermoplastique de la zone de soudage est à un état fondu.

À partir de ces consignes de température, l'unité électronique de contrôle réalise un pilotage des moyens de chauffage lors d'un soudage, mais également un pilotage des moyens de pressage 4.

L'unité électronique est avantageusement couplée aux moyens de mesure afin de s'assurer que les températures atteintes à la surface de la surface d'interface et de la zone de soudage lors du soudage respectent les consignes de température.

Selon un mode de réalisation avantageux, l'interface de saisie et de définition permet de renseigner la première borne de température et la seconde borne de température, l'unité électronique de contrôle ne s'assurant alors, et/ou ne permettant alors la définition d'une première consigne de température qu'au-delà de la première borne de température, et la définition d'une deuxième consigne de température qu'en deçà de la seconde borne de température.

Il est envisageable que la première consigne de température et la deuxième consigne de température soient définies automatiquement par l'unité électronique de contrôle à partir de la première borne de température et de la seconde borne de température saisie par l'utilisateur à partir des pourcentages évoqués préalablement pour le procédé.

L'interface de saisie et de définition permet également de programmer une puissance et/ou une durée de chauffe prédéterminée, ou minimale, pour le premier sous-ensemble de chauffage 51.

Cette puissance et/ou durée de chauffe prédéterminée ou minimale est ou sont réglées afin qu'à l'issue de l'étape de chauffe, l'élément 2 à souder a emmagasiné une quantité de chaleur strictement supérieure à une quantité de chaleur nécessaire pour porter, lors de l'étape de pressage, la température de la zone de soudage 31 à la deuxième borne de température, et permettre une reptation moléculaire entre la surface d'interface et la zone de soudage.

Dans un mode de réalisation envisagé, le dispositif 1 comprend des moyens électroniques de détermination de la quantité de chaleur nécessaire pour porter, lors de l'étape de pressage, la température de la zone de soudage 31 à la deuxième borne de température, et permettre une reptation moléculaire entre la surface d'interface et la zone de soudage.

Ces moyens électroniques de détermination sont, selon un mode de réalisation préféré, programmés avec un abaque de calcul, et configurés pour calculer la quantité de chaleur nécessaire à partir de la première borne de température, de la deuxième borne de température, de la première consigne de température de chauffe, de la deuxième consigne de température de chauffe, et de l'abaque de calcul.

En alternative de l'abaque de calcul, il peut être envisagé la mise en place d'un modèle mathématique ou d'un apprentissage automatisé permettant le calcul de la quantité de chaleur nécessaire.

Une fois la quantité de chaleur nécessaire déterminée, l'unité électronique de contrôle calcule la puissance et/ou durée de chauffe prédéterminée, ou minimale, pour le premier sous-ensemble de chauffage 51, puis pilote les moyens de chauffage en fonction de cette puissance et/ou durée de chauffe.

Le dispositif 1 et le procédé précédemment décrits permettent de réaliser un soudage de l'élément 2 à souder sur la base 3 qui présente des performances mécaniques d'assemblage au moins égales à celles d'assemblages de type collé.

Des essais et des analyses ont démontré, par exemple dans le cas où la base est un composite, qu'il ne se produit pas, ou peu, d'endommagement de la plaque ou pièce en composite thermoplastique et notamment pas de délaminage post soudage, ni de glissement de plis.

Ce procédé permet de ne pas générer de pollution particulaire ou moléculaire.

Le dispositif 1 permet de réaliser un soudage qui est notamment plus rapide qu'un procédé d'assemblage par collage et qui permet de ne pas nécessiter de matière, et qui est en plus automatisable.

## Revendications

1. Procédé de soudage d'un élément (2) à souder sur une base (3), l'élément (2) à souder présentant une surface d'interface (21) en polymère thermoplastique destinée à être soudée sur une zone de soudage (31) de la base (3), la zone de soudage (31) de la base (3) étant en polymère thermoplastique apte à s'unir par soudure avec le polymère thermoplastique de la surface d'interface (21) de l'élément (2) à souder, le procédé comprenant une étape de chauffe de l'élément (2) à souder et de la base (3), puis une étape de pressage de l'élément (2) à souder sur la base (3),
le polymère thermoplastique de la surface d'interface présentant une borne de température, dite première borne de température, correspondant à une température à partir de laquelle le polymère thermoplastique de la surface d'interface est à un état fondu,
le polymère thermoplastique de la zone de soudage présentant une borne de température, dite deuxième borne de température, correspondant à une température à partir de laquelle le polymère thermoplastique de la surface d'interface est à un état fondu,
l'étape de chauffe comprenant une sous-étape principale de chauffe consistant à :
- chauffer la surface d'interface (21) à une température supérieure à la première borne de température, et
- chauffer la zone de soudage (31) à une température inférieure à la deuxième borne de température,
**caractérisé en ce que**, à l'issue de l'étape de chauffe, l'élément (2) à souder a emmagasiné une quantité de chaleur strictement supérieure à une quantité de chaleur nécessaire pour porter, lors de l'étape de pressage, la température de la zone de soudage (31) à la deuxième borne de température, et permettre une reptation moléculaire entre la surface d'interface et la zone de soudage.

2. Procédé selon la revendication précédente, **caractérisé en ce que** lors de la sous-étape principale de chauffe, la surface d'interface (21) est chauffée à une température inférieure à 120%, préférentiellement inférieure à 116%, de la température de fusion du polymère thermoplastique semi-cristallin de la surface d'interface (21) de l'élément (2) à souder.

3. Procédé selon l'une quelconque des revendications précédentes, **caractérisé en ce que** lors de la sous-étape principale de chauffe, la zone de soudage (31) est chauffée à une température supérieure à 90%, préférentiellement supérieure à 99%, de la température de fusion du polymère thermoplastique semi-cristallin de la zone de soudage (31) de la base (3).

4. Procédé selon l'une quelconque des revendications précédentes, **caractérisé en ce que** lors de l'étape de chauffe, le chauffage de la zone de soudage (31) est réalisé en focalisant la chauffe sur la zone de soudage (31).

5. Procédé selon la revendication précédente, **caractérisé en ce que** l'étape de chauffe comprend une sous-étape terminale de chauffe, succédant à la sous-étape principale de chauffe, et pendant laquelle on augmente la chauffe de la zone de soudage (31) à la deuxième borne de température ou au-delà de la deuxième borne de température.

6. Procédé selon la revendication précédente, **caractérisé en ce que** pendant la sous-étape terminale de chauffe, on augmente la chauffe de la surface d'interface (21) par rapport à une température atteinte lors de la sous-étape principale de chauffe.

7. Procédé selon l'une quelconque des revendications précédentes, **caractérisé en ce que** la sous-étape principale de chauffe comprend :
- une phase préalable de montée en température d'une température de surface de la surface d'interface (21) et de la zone de soudage (31) ;
- une phase terminale de stabilisation de la température de surface de la surface d'interface (21) et de la zone de soudage (31).

8. Dispositif (1) de soudage d'un élément (2) à souder sur une base (3), l'élément (2) à souder présentant une surface d'interface (21) en polymère thermoplastique destinée à être soudée sur une zone de soudage (31) de la base (3), la zone de soudage (31) de la base (3) étant en polymère thermoplastique apte à s'unir par soudure avec le polymère thermoplastique de la surface d'interface (21) de l'élément (2) à souder, le dispositif (1) comprenant des moyens de chauffage de l'élément (2) à souder et de la base (3), et des moyens de pressage (4) de l'élément (2) à souder contre la base (3),
les moyens de chauffage comprenant deux sous-ensembles distincts de chauffage, dont un premier sous-ensemble de chauffage (51) pour le chauffage de l'élément (2) à souder et un second sous-ensemble de chauffage (52) pour le chauffage de la base (3),
le dispositif (1) de soudage comprenant une unité électronique de contrôle des moyens de chauffage configurée pour réaliser un contrôle indépendant et distinct du premier sous-ensemble de chauffage (51) et du second sous-ensemble de chauffage (52),
l'unité électronique de contrôle comprenant une interface de saisie et de définition :
- d'une première consigne de température de chauffe pour le premier sous-ensemble de chauffage (51), lors d'une sous-étape principale de chauffe, cette première consigne de température étant supérieure à une première borne de température correspondant à une température à partir de laquelle le polymère thermoplastique de la surface d'interface est à un état fondu ;
- d'une deuxième consigne de température de chauffe pour le second sous-ensemble de chauffage (52), lors de la sous-étape principale de chauffe, cette deuxième consigne de température de chauffe étant à inférieure à une deuxième borne de température correspondant à une température à partir de laquelle le polymère thermoplastique de la zone de soudage est à un état fondu,
**caractérisé en ce qu'**il comprend :
- des moyens électroniques de détermination d'une quantité de chaleur nécessaire pour porter, lors d'une étape de pressage, la température de la zone de soudage (31) à la deuxième borne de température, et permettre une reptation moléculaire entre la surface d'interface (21) et la zone de soudage (31) ;
- une unité électronique de contrôle configurée pour calculer une puissance et/ou une durée de chauffe prédéterminée, ou minimale, pour le premier sous-ensemble de chauffage (51), lors de la sous-étape principale de chauffe, puis pour piloter les moyens de chauffage en fonction de cette puissance et/ou durée de chauffe.

9. Dispositif (1) selon la revendication précédente, **caractérisé en ce qu'**il comprend un masque de focalisation (8) de la chauffe, ou un concentrateur de faisceaux radiatifs, sur la zone de soudage (31) de la base (3).

10. Dispositif (1) selon l'une quelconque des revendications 8 et 9, **caractérisé en ce qu'**il comprend un porte élément (9) configuré pour porter un élément (2) à souder, le porte élément (9) comprenant une paroi périphérique (92) entourant une cavité de réception de l'élément (2) à souder, la paroi périphérique (92) présentant une surface périphérique (93) de pressage destinée à s'étendre autour de la surface d'interface (21) de l'élément (2) à souder reçu dans la cavité de réception, dans la continuité de cette surface d'interface (21).

11. Dispositif (1) selon l'une quelconque des revendications 8 à 10, **caractérisé en ce que** les moyens électroniques de détermination sont programmés avec un abaque de calcul, et configurés pour calculer la quantité de chaleur nécessaire à partir de la première borne de température, de la deuxième borne de température, de la première consigne de température de chauffe, de la deuxième consigne de température de chauffe, et de l'abaque de calcul.

## Patentansprüche

1. Verfahren zum Verschweißen eines zu schweißenden Elements (2) auf eine Basis (3),
wobei das zu schweißende Element (2) eine Schnittstellenoberfläche (21) aus thermoplastischem Polymer aufweist, die zum Verschweißen auf einen Schweißbereich (31) der Basis (3) vorgesehen ist,
wobei der Schweißbereich (31) der Basis (3) aus einem thermoplastischen Polymer besteht, das sich durch Verschweißen mit dem thermoplastischen Polymer der Schnittstellenoberfläche (21) des zu schweißenden Elements (2) verbinden lässt, wobei das Verfahren einen Schritt zum Erhitzen des zu schweißenden Elements (2) und der Basis (3) und anschließend einen Schritt des Pressens des zu schweißenden Elements (2) auf die Basis (3) umfasst,
wobei das thermoplastische Polymer der Schnittstellenoberfläche eine Temperaturgrenze, die erste Temperaturgrenze, besitzt, die einer Temperatur entspricht, ab der das thermoplastische Polymer der Schnittstellenoberfläche in einem geschmolzenen Zustand ist,
wobei das thermoplastische Polymer des Schweißbereichs eine Temperaturgrenze, die zweite Temperaturgrenze, besitzt, die einer Temperatur entspricht, ab der das thermoplastische Polymer der Schnittstellenoberfläche in einem geschmolzenen Zustand ist,
wobei der Schritt des Erhitzens einen Hauptunterschritt des Erhitzens umfasst, der aus Folgendem besteht:
- Erhitzen der Schnittstellenoberfläche (21) auf eine Temperatur über der ersten Temperaturgrenze, und
- Erhitzen des Schweißbereichs (31) auf eine Temperatur unterhalb der zweiten Temperaturgrenze,
**dadurch gekennzeichnet, dass** nach Abschluss des Schritts des Erhitzens das zu schweißende Element (2) eine Wärmemenge gespeichert hat, die strikt größer ist als eine Wärmemenge, die erforderlich ist, um während des Schritts des Pressens die Temperatur des Schweißbereichs (31) auf die zweite Temperaturgrenze zu bringen und eine molekulare Kriechbewegung zwischen der Schnittstellenoberfläche und dem Schweißbereich zu ermöglichen.

2. Verfahren nach dem vorherigen Anspruch, **dadurch gekennzeichnet, dass** bei dem Hauptunterschritt des Erhitzens die Schnittstellenoberfläche (21) auf eine Temperatur erhitzt wird, die unter 120 %, vorzugsweise unter 116 %, der Schmelztemperatur des halbkristallinen thermoplastischen Polymers der Schnittstellenoberfläche (21) des zu schweißenden Elements (2) liegt.

3. Verfahren nach einem der vorhergehenden Ansprüche, **dadurch gekennzeichnet, dass** bei dem Hauptunterschritt des Erhitzens der Schweißbereich (31) auf eine Temperatur erwärmt wird, die über 90 %, vorzugsweise über 99 %, der Schmelztemperatur des halbkristallinen thermoplastischen Polymers des Schweißbereichs (31) der Basis (3) liegt.

4. Verfahren nach einem der vorhergehenden Ansprüche, **dadurch gekennzeichnet, dass** bei dem Schritt des Erhitzens das Erhitzen des Schweißbereichs (31) durch Fokussieren der Erhitzung auf den Schweißbereich (31) erfolgt.

5. Verfahren nach dem vorherigen Anspruch, **dadurch gekennzeichnet, dass** der Schritt des Erhitzens einen abschließenden Unterschritt des Erhitzens umfasst, der auf den Hauptunterschritt des Erhitzens folgt, und während dessen das Erhitzen des Schweißbereichs (31) an der zweiten Temperaturgrenze oder über der zweiten Temperaturgrenze hinaus erhöht wird.

6. Verfahren nach dem vorherigen Anspruch, **dadurch gekennzeichnet, dass** während des abschließenden Unterschritts des Erhitzens der Schnittstellenoberfläche (21) das Erhitzen gegenüber einer während des Hauptunterschritts des Erhitzens erreichten Temperatur erhöht wird.

7. Verfahren nach einem der vorhergehenden Ansprüche, **dadurch gekennzeichnet, dass** der Hauptunterschritt des Erhitzens Folgendes umfasst:
- eine Vorphase zum Erhöhen der Oberflächentemperatur der Schnittstellenoberfläche (21) und des Schweißbereichs (31);
- eine Endphase zum Stabilisieren der Oberflächentemperatur der Schnittstellenoberfläche (21) und des Schweißbereichs (31).

8. Vorrichtung (1) zum Verschweißen eines auf eine Basis (3) zu schweißenden Elements (2), wobei das zu schweißende Element (2) eine Schnittstellenoberfläche (21) aus thermoplastischem Polymer besitzt, die zu dem Verschweißen auf einen Schweißbereich (31) der Basis (3) vorgesehen ist,
wobei der Schweißbereich (31) der Basis (3) aus einem thermoplastischen Polymer besteht, das sich durch Verschweißen mit dem thermoplastischen Polymer der Schnittstellenoberfläche (21) des zu schweißenden Elements (2) verbinden lässt, wobei die Vorrichtung (1) Mittel zum Erhitzen des zu schweißenden Elements (2) und der Basis (3) und Mittel zum Pressen (4) des gegen die Basis (3) zu schweißenden Elements (2) umfasst,
wobei die Mittel zum Erhitzen zwei getrennte Unterbaugruppen zum Erhitzen umfassen, darunter eine erste Unterbaugruppe zum Erhitzen (51) zum Erhitzen des zu schweißenden Elements (2) und eine zweite Unterbaugruppe zum Erhitzen (52) zum Erhitzen der Basis (3),
wobei die Schweißvorrichtung (1) eine elektronische Steuereinheit der Mittel zum Erhitzen umfasst, die so konfiguriert ist, dass sie eine unabhängige und getrennte Steuerung der ersten Unterbaugruppe zum Erhitzen (51) und der zweiten Unterbaugruppe zum Erhitzen (52) durchführt,
wobei die elektronische Steuereinheit eine Eingabe- und Definitionsschnittstelle umfasst:
- einen ersten Temperatursollwert des Erhitzens für die erste Unterbaugruppe zum Erhitzen (51), während eines Hauptunterschritts des Erhitzens, wobei dieser erste Temperatursollwert höher ist als eine erste Temperaturgrenze, die einer Temperatur entspricht, ab der das thermoplastische Polymer der Schnittstellenoberfläche in einem geschmolzenen Zustand ist;
- einen zweiten Temperatursollwert des Erhitzens für die zweite Unterbaugruppe zum Erhitzen (52), während des Hauptunterschritts des Erhitzens, wobei dieser zweite Temperatursollwert des Erhitzens kleiner ist als eine zweite Temperaturgrenze, die einer Temperatur entspricht, ab der das thermoplastische Polymer des Schweißbereichs in einem geschmolzenen Zustand ist,
**dadurch gekennzeichnet, dass** es Folgendes umfasst:
- elektronische Mittel zur Bestimmung einer Wärmemenge, die erforderlich ist, um bei einem Schritt des Pressens die Temperatur des Schweißbereichs (31) auf die zweite Temperaturgrenze zu bringen und eine molekulare Kriechbewegung zwischen der Schnittstellenoberfläche (21) und dem Schweißbereich (31) zu ermöglichen;
- eine elektronische Steuereinheit, die so konfiguriert ist, dass sie eine vorbestimmte oder minimale Heizleistung und/oder -dauer für die erste Unterbaugruppe zum Erhitzen (51) während des Hauptunterschritts des Erhitzens berechnet und dann die Mittel zum Erhitzen in Abhängigkeit von dieser Heizleistung und/oder -dauer steuert.

9. Vorrichtung (1) nach dem vorhergehenden Anspruch, **dadurch gekennzeichnet, dass** sie eine Maske (8) zur Fokussierung der Erhitzung oder einen Strahlungskonzentrator auf den Schweißbereich (31) der Basis (3) umfasst.

10. Vorrichtung (1) nach einem der Ansprüche 8 und 9, **dadurch gekennzeichnet, dass** sie einen Elementhalter (9) umfasst, der so konfiguriert ist, dass er ein zu Verschweißendes Element (2) trägt, wobei der Elementhalter (9) eine Umfangswand (92) umfasst, die einen Aufnahmehohlraum des zu schweißenden Elements (2) umgibt, wobei die Umfangswand (92) eine Pressumfangsfläche (93) besitzt, die sich um die Schnittstellenoberfläche (21) des in dem Aufnahmehohlraum aufgenommenen zu schweißenden Elements (2) in Kontinuität mit dieser Schnittstellenoberfläche (21) erstrecken soll.

11. Vorrichtung (1) nach einem der Ansprüche 8 bis 10, **dadurch gekennzeichnet, dass** die elektronischen Mittel zur Bestimmung mit einem Berechnungsschema programmiert und so konfiguriert sind, dass sie die erforderliche Wärmemenge aus der ersten Temperaturgrenze, der zweiten Temperaturgrenze, dem ersten Temperatursollwert des Erhitzens, dem zweiten Temperatursollwert des Erhitzens und dem Berechnungsschema berechnen.

## Claims

1. Method for welding an element (2) to be welded onto a base (3),
the element (2) to be welded having an interface surface (21) made of a thermoplastic polymer intended to be welded onto a welding area (31) of the base (3),
the welding area (31) of the base (3) being made of a thermoplastic polymer capable of bonding by welding with the thermoplastic polymer of the interface surface (21) of the element (2) to be welded, the method comprising a step of heating the element (2) to be welded and the base (3), followed by a step of pressing the element (2) to be welded onto the base (3),
the thermoplastic polymer of the interface surface having a temperature limit, referred to as the first temperature limit, corresponding to a temperature from which the thermoplastic polymer of the interface surface is in a molten state,
the thermoplastic polymer of the welding area having a temperature limit, referred to as the second temperature limit, corresponding to a temperature from which the thermoplastic polymer of the interface surface is in a molten state,
the heating step comprising a main heating substep consisting of:
- heating the interface surface (21) to a temperature above the first temperature limit, and
- heating the welding area (31) to a temperature below the second temperature limit,
**characterised in that**, at the end of the heating step, the element (2) to be welded has stored an amount of heat that is strictly greater than the amount of heat required to raise the temperature of the welding area (31) to the second temperature limit during the pressing step, thereby allowing molecular creep between the interface surface and the welding area.

2. Method according to the preceding claim, **characterised in that**, during the main heating substep, the interface surface (21) is heated to a temperature lower than 120%, preferably lower than 116% of the melting temperature of the semicrystalline thermoplastic polymer of the interface surface (21) of the element (2) to be welded.

3. Method according to any one of the preceding claims, **characterised in that**, during the main heating substep, the welding area (31) is heated to a temperature higher than 90%, preferably higher than 99% of the melting temperature of the semicrystalline thermoplastic polymer in the welding area (31) of the base (3).

4. Method according to any one of the preceding claims, **characterised in that** during the heating step, the welding area (31) is heated by focusing the heat on the welding area (31).

5. Method according to the preceding claim, **characterised in that** the heating step comprises a final heating substep, following the main heating substep, during which heating of the welding area (31) is increased to the second temperature limit or beyond the second temperature limit.

6. Method according to the preceding claim, **characterised in that**, during the final heating substep, heating of the interface surface (21) is increased relative to a temperature reached during the main heating substep.

7. Method according to any one of the preceding claims, **characterised in that** the main heating substep comprises:
- a preliminary phase of raising the temperature of a surface temperature of the interface surface (21) and the welding area (31);
- a final phase of stabilising the surface temperature of the interface surface (21) and the welding area (31).

8. Device (1) for welding an element (2) to be welded onto a base (3), the element (2) to be welded having an interface surface (21) made of thermoplastic polymer intended to be welded onto a welding area (31) of the base (3),
the welding area (31) of the base (3) being made of a thermoplastic polymer capable of bonding by welding with the thermoplastic polymer of the interface surface (21) of the element (2) to be welded, the device (1) comprising means for heating the element (2) to be welded and the base (3), and means for pressing (4) the element (2) to be welded against the base (3),
the heating means comprising two separate heating subassemblies, including a first heating subassembly (51) for heating the element (2) to be welded and a second heating subassembly (52) for heating the base (3),
the welding device (1) comprising an electronic control unit for the heating means configured to carry out independent and separate control of the first heating subassembly (51) and of the second heating subassembly (52),
the electronic control unit comprising an interface for inputting and defining:
- a first heating temperature setpoint for the first heating subassembly (51), during a main heating substep, this first temperature setpoint being higher than a first temperature limit corresponding to the temperature beyond which the thermoplastic polymer of the interface surface is in a molten state;
- a second heating temperature setpoint for the second heating subassembly (52), during the main heating substep, this second heating temperature setpoint being lower than a second temperature limit corresponding to the temperature beyond which the thermoplastic polymer in the welding area is in a molten state, **characterised in that** it comprises:
- electronic means for determining the amount of heat required to raise the temperature of the welding area (31) to the second temperature limit during a pressing step, and to enable molecular creep between the interface surface (21) and the welding area (31);
- an electronic control unit configured to calculate a predetermined, or minimum, heating power and/or duration for the first heating subassembly (51), during the main heating substep, then to control the heating means according to this heating power and/or duration.

9. Device (1) according to the preceding claim, **characterised in that** it comprises a mask (8) for focusing the heating, or a concentrator of radiation beams, over the welding area (31) of the base (3).

10. Device (1) according to any one of claims 8 and 9, **characterised in that** it comprises an element holder (9) configured to hold an element (2) to be welded, the element holder (9) comprising a peripheral wall (92) surrounding a cavity for receiving the element (2) to be welded,
the peripheral wall (92) having a peripheral pressing surface (93) intended to extend around the interface surface (21) of the element (2) to be welded, which is received in the receiving cavity, in continuity of this interface surface (21).

11. Device (1) according to any one of claims 8 to 10, **characterised in that** the electronic determination means are programmed with a calculation chart and configured to calculate the amount of heat required based on the first temperature limit, the second temperature limit, the first heating temperature setpoint, the second heating temperature setpoint, and the calculation chart.
